# FASCICULE DE BREVET EUROPEEN

(11) **EP 0 478 759 B1**
(45) Date de publication et mention de la délivrance du brevet: **18.10.1995**
(21) Numéro de dépôt: 91908669.4
(22) Date de dépôt: 11.04.1991
(51) Int. Cl.: F16J 15/52, F16H 21/14

(54) **DISPOSITIF DE TRANSMISSION ETANCHE D'UN MOUVEMENT DE ROTATION, A SOUFFLET METALLIQUE**
METALLBALGEINRICHTUNG ZUR DICHTEN ÜBERTRAGUNG EINER DREHENDEN BEWEGUNG
DEVICE FOR THE LEAKPROOF TRANSMISSION OF ROTATIONAL MOVEMENT, WITH METAL GAITER

(30) Priorité: 12.04.1990 FR 9004733
(43) Date de publication de la demande: 08.04.1992
(73) Titulaire: MEKANOR, 27500 Pont Audemer (FR)
(72) Inventeur: LECLAIRE, Remi Plaine de l'Abbaye, F-27500 Pont-Audemer (FR); POTTIER, Daniel, F-27500 Pont-Audemer (FR)
(74) Mandataire: CABINET BONNET-THIRION
(86) Numéro de dépôt international: FR9100298
(87) Numéro de publication internationale: WO9116559

(56) Documents cités:
- CH-A- 377 605
- US-A- 2 137 303

## Description

L'invention se rapporte à un dispositif de transmission étanche d'un mouvement de rotation, à soufflet métallique, plus particulièrement adapté à la commande d'une vanne, notamment une vanne quart de tour du type utilisé dans les installations industrielles, pour les commandes à distance.

L'invention concerne plus particulièrement un agencement simple et facile à fabriquer, dans lequel le soufflet est efficacement protégé de toute sollicitation en torsion, notamment lorsqu'un couple résistant excessif s'exerce sur l'un des arbres ou même lorsque celui-ci se bloque accidentellement.

On connait plusieurs sortes de dispositifs de transmission étanche à soufflet métallique. Dans un tel dispositif connu, le soufflet est agencé autour d'un arbre récepteur, assurant par exemple la commande d'un mécanisme de vanne. Le soufflet assure l'isolement entre ce mécanisme et le milieu extérieur de sorte que, si une fuite prend naissance le long de cet arbre, le fluide, éventuellement dangereux, ne puisse se répandre à l'extérieur.

Par exemple, la demande de brevet FR-A-2 617 567, sur laquelle repose le préambule de la revendication 1, décrit un dispositif dans lequel le soufflet est soudé de façon parfaitement étanche, par ses extrémités axiales, entre une partie fixe du boîtier du dispositif de transmission et une pièce de transfert mobile dans ce boîtier, couplée à la fois à l'arbre récepteur et à l'arbre de commande. Pour que le soufflet puisse remplir durablement sa fonction, il est impératif, comme mentionné ci-dessus, qu'il ne soit soumis à aucun effort de torsion. C'est pourquoi, dans le dispositif antérieur en question, la pièce de transfert est assujettie à se déplacer de façon rigoureuse selon une "translation circulaire". Ce mouvement est, selon l'exemple connu, obtenu positivement par une cinématique appropriée des pièces assemblées. Cependant, certaines pièces du dispositif décrit sont difficiles à fabriquer et le principe retenu impose de décaler physiquement l'arbre de commande et l'arbre récepteur qui s'étendent respectivement aux deux extrémités axiales du boîtier du dispositif, parallèlement l'un à l'autre. Il n'est pas possible de concevoir un tel dispositif avec l'arbre de commande et l'arbre récepteur alignés.

L'invention a pour principal but de proposer un autre type de dispositif de transmission étanche à soufflet, qui ne comporte qu'un petit nombre de pièces faciles à fabriquer dans lequel une cinématique appropriée des pièces mobiles, protégeant le soufflet de toute torsion, est obtenue de façon "résultante" grâce à des moyens mécaniques d'interdiction, associés à la pièce de transfert.

Un autre but de l'invention est de proposer un dispositif de transmission étanche dans lequel ladite cinématique appropriée n'impose pas que l'arbre de commande et l'arbre récepteur soient physiquement décalés parallèlement l'un à l'autre.

Plus précisément, l'invention concerne donc un dispositif de transmission étanche d'un mouvement de rotation, à soufflet, comprenant un arbre de commande et un arbre récepteur parallèles, du type dans lequel ledit soufflet entoure un tel arbre récepteur et est fixé de façon étanche par ses deux extrémités, d'une part à une partie fixe formant boîtier et d'autre part, à une pièce de transfert mobile à l'intérieur de ce boîtier et couplée aux deux arbres par des liaisons de forme à excentrique, respectivement, caractérisé en ce que ladite pièce de transfert est en outre guidée, avec possibilité de translation, selon une trajectoire voisine d'un plan perpendiculaire à la direction des deux arbres parallèles, par un élément basculant articulé transversalement à une direction longitudinale dudit boîtier par deux tourillons alignés s'étendant suivant une direction perpendiculaire à ladite direction des deux arbres.

Dans un tel système, toute torsion du soufflet (notamment en cas de blocage de l'un des arbres) est évitée par le couplage entre la pièce de transfert et l'élément basculant, ce dernier étant rattaché à la paroi du boîtier. Dans le cas où le dispositif est utilisé pour la commande d'une vanne, l'arbre entouré par le soufflet constitue un arbre récepteur du dispositif de transmission, l'autre arbre constituant un arbre de commande.

Selon un mode de réalisation possible, l'élément basculant précité est constitué par un vilebrequin engagé dans un alésage transversal de la pièce de transfert de façon que celle-ci coulisse sur l'arbre dudit vilebrequin. Ce dernier comporte deux tourillons précités désaxés à ses extrémités, respectivement engagés dans deux paliers alignés agencés dans ou portés par la paroi dudit boîtier. Un tel agencement est bien adapté pour la commande d'une vanne quart de tour. En effet, le vilebrequin peut être placé de façon à traverser un embrèvement d'un élargissement de l'un des arbres, plus particulièrement l'arbre de commande. Dans un tel cas, le vilebrequin et les limites de l'embrèvement coopèrent pour définir des butées de fin de course.

Selon un autre mode de réalisation possible, l'élément basculant est constitué par un manchon agencé autour du soufflet. Ce manchon est articulé au voisinage de l'une de ses extrémités à ladite pièce de transfert et au voisinage de son autre extrémité, audit boîtier. Le manchon est pourvu de deux paliers transversaux alignés dans lesquels sont engagés deux petits arbres alignés, portés par la pièce de transfert. Grâce à une telle structure, la pièce de transfert et l'élément basculant ne se rencontrent pas et le dispositif, capable d'une rotation de 360° et plus peut être raccordé à n'importe quel organe tournant, y compris un moteur.

L'invention sera mieux comprise et d'autres avantages de celle-ci apparaîtront plus clairement à la lumière de la description qui va suivre de plusieurs modes de réalisation d'un dispositif de transmission étanche d'un mouvement de rotation, conforme à son principe, donnée uniquement à titre d'exemple et faite en référence aux dessins annexés dans lesquels:
- la figure 1 est une vue en élévation d'un dispositif de commande à soufflet conforme à l'invention, représentée selon la coupe I-I de la figure 2;
- la figure 2 est une coupe II-II de la figure 1;
- les figures 3 à 6 et les figures 3a à 6a sont des vues schématiques simplifiées représentant respectivement la pièce de transfert et l'élément pivotant accouplés, d'une part, et l'élément pivotant vu en bout, d'autre part, pour différentes positions de l'arbre de commande;
- la figure 7 est une vue en élévation d'un autre mode de réalisation d'un dispositif de commande à soufflet conforme à l'invention, représentée selon la coupe VII-VII de la figure 8; et
- la figure 8 est une coupe VIII-VIII de la figure 7.

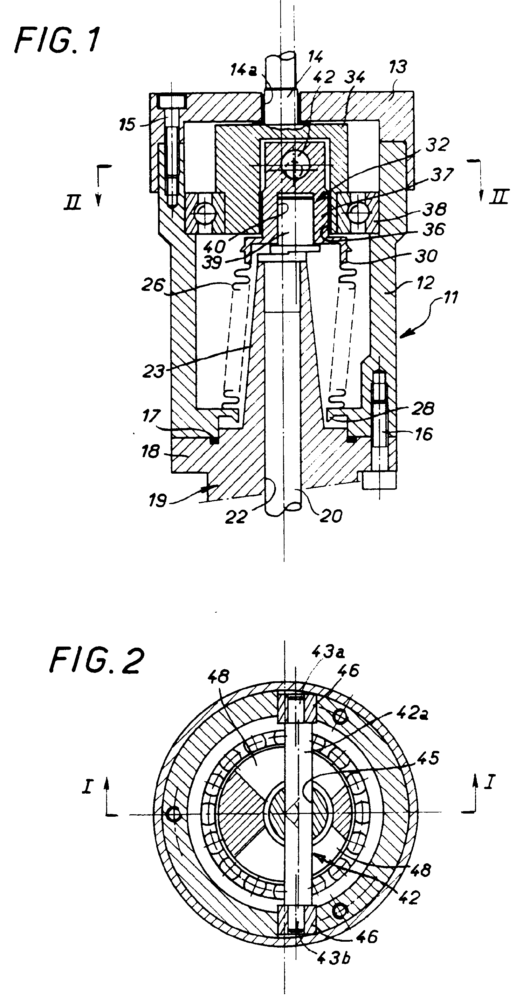

En se référant plus particulièrement aux figures 1 à 6, le dispositif de transmission étanche comporte un boîtier 11 constitué d'un corps tubulaire 12 globalement cylindrique et d'un élément formant couvercle 13 dans lequel un premier arbre, ici un arbre de commande 14 est monté en rotation. L'arbre 14 fait saillie axialement au centre du couvercle 13 en traversant un alésage formant palier 14a dudit couvercle. Ce dernier est fixé au corps tubulaire 12 par des vis 15. A son autre extrémité axiale, le corps 12 est assemblé par des vis 16 à une bride 18 d'un élément de structure 19 renfermant un mécanisme non représenté (par exemple une vanne quart de tour) actionné par un second arbre, ici un arbre récepteur 20, du dispositif de transmission. L'assemblage entre le corps tubulaire 12 et l'élément de structure 19 est rendu étanche par interposition d'un joint d'étanchéité annulaire 17. L'arbre récepteur 20 est guidé dans l'alésage 22 d'un canon 23 faisant partie de l'élément de structure 19. Un soufflet métallique 26 entoure le canon 23 et par conséquent l'arbre récepteur 20. Ce soufflet est fixé de façon étanche par l'une de ses extrémités, au boîtier 11. Il est plus particulièrement soudé à une couronne 28 faisant intérieurement saillie de la paroi du corps tubulaire 12, au voisinage de l'extrémité de celui-ci qui se trouve assemblée à l'élément de structure 19. L'autre extrémité du soufflet est aussi assemblée de façon étanche (soudée) à une couronne 30 que comporte une pièce de transfert 32 assujettie à se déplacer dans le boîtier 11. Les deux arbres 14 et 20 sont au moins parallèles si ce n'est alignés. Dans l'exemple décrit, les alésages 14a et 22 sont alignés selon l'axe de symétrie du corps tubulaire 12 de sorte que les arbres 14 et 20 (à l'exception de leurs moyens de couplage à la pièce de transfert) sont alignés.

L'arbre de commande 14 est couplé à la pièce de transfert 32 par des liaisons de forme à excentrique qui consistent en un élargissement 34 de l'arbre de commande 14, à l'intérieur du boîtier 11, comportant un palier 36 cylindrique d'axe parallèle à l'arbre de commande 14 (mais espacé de celui-ci) à l'intérieur duquel est guidée une portion cylindrique 37 de la pièce de transfert, coaxiale à la couronne 30 à laquelle se raccorde le soufflet. L'élargissement 34 de l'arbre de commande est monté tournant dans le boîtier par l'intermédiaire d'un roulement à bille 38.

L'arbre récepteur 20 est, quant à lui, couplé à la pièce de transfert 32 par des liaisons de forme à excentrique constituées par une manivelle 39 définie à l'extrémité intérieure correspondante de l'arbre 20. Cette manivelle est engagée dans un alésage 40 de la pièce de transfert. Cet alésage est ici coaxial à la portion cylindrique 37 et pratiqué dans celle-ci. Le palier 36 est de dimensions telles que la pièce de transfert 32 puisse se déplacer en rotation et en translation (de faible amplitude, comme on le verra plus loin) à l'intérieur de celui-ci.

En outre, la pièce de transfert 32 est guidée avec possibilité de translation perpendiculairement à la direction longitudinale des arbres 14 et 20, par un élément basculant 42 ayant ici la forme d'une sorte de vilebrequin, articulé transversalement à la direction longitudinale du boîtier (c'est-à-dire autour d'un axe perpendiculaire à la direction des arbres 14 et 20) au moyen de deux tourillons 43a, 43b alignés. L'élément basculant 42 formant vilebrequin comporte un arbre 42a engagé à coulissement au travers d'un alésage transversal 45 de la pièce de transfert 32. Il comporte les deux tourillons 43a, 43b, agencés aux extrémités de l'arbre 42a, respectivement. Ces tourillons sont désaxés de façon à former des sortes de manivelles dudit vilebrequin. Lesdits tourillons sont engagés dans des paliers 46 alignés, agencés dans des alésages pratiqués dans la paroi du boîtier 11 ou plus généralement portés par cette paroi. De plus, ce vilebrequin est situé au niveau de l'élargissement 34 de l'arbre 14. Autrement dit, l'alésage 45 est pratiqué dans la partie de la pièce de transfert qui se trouve engagée dans l'alésage 36 dudit élargissement. Pour ce faire, ledit élargissement 34 comporte un double embrèvement 48 s'ouvrant latéralement et traversé par l'arbre 42a. De cette façon, le débattement angulaire de l'arbre de commande 14 est limité à une valeur donnée, par exemple un quart de tour, par la coopération des limites de l'embrèvement avec l'arbre 42a.

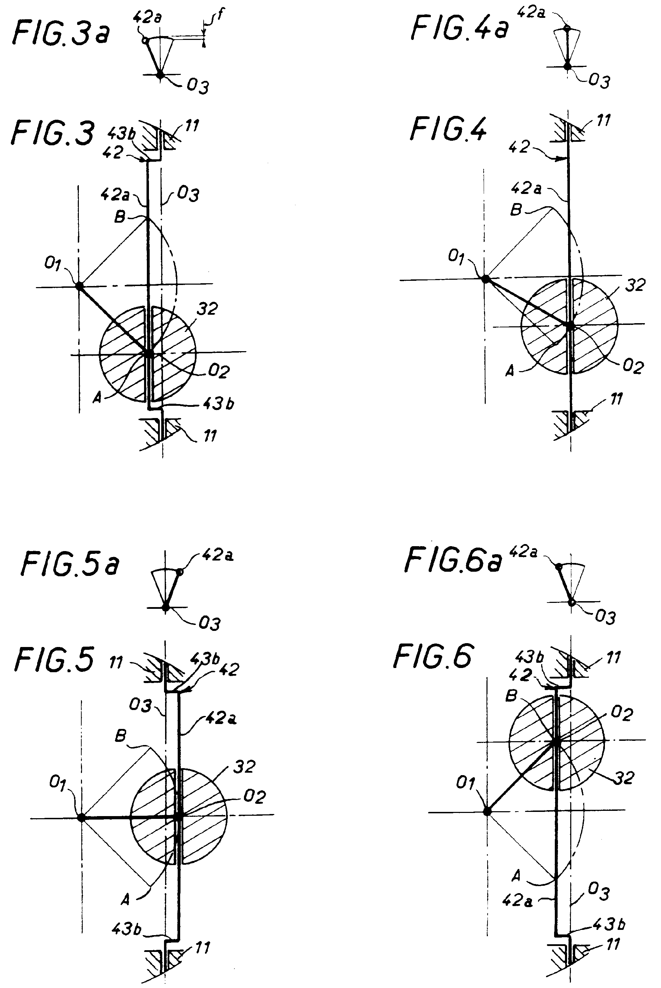

Le fonctionnement du dispositif qui vient d'être décrit va maintenant être analysé en référence aux figures 3 à 6 et 3a à 6a.

Sur ces schémas, on retrouve la pièce de transfert 32 et l'élément basculant 42 formant le vilebrequin. Ce dernier est articulé par ses extrémités au boîtier 11 par les tourillons 43a, 43b. L'axe O₁ est l'axe commun des arbres 14 et 20. L'axe O₂ est celui de la pièce de transfert 32 et donc celui de la manivelle 39. L'élément basculant 42 oscille autour de l'axe O₃ des tourillons 43a, 43b alignés. Les deux positions extrêmes de l'axe O₂ de la pièce de transfert sont repérés par les lettres A et B. En projection dans un plan parallèle à celui des figures 3 à 6, la trajectoire de la pièce de transfert est donc l'arc 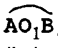 . Au cours de cette trajectoire, elle coulisse sur l'arbre 42a de l'élément basculant qui oscille autour de l'axe O₃. De ce fait, la pièce de transfert 32 ne peut absolument pas tourner et le soufflet 26 qui y est rattaché n'est soumis à aucune torsion.

Sur les figures 3 et 3a, la pièce de transfert est dans l'une de ses positions extrêmes, avec son axe O₂ situé en A, l'élément basculant 42 est incliné au maximum dans un sens ("vers la gauche" en considérant la figure 3a).

Sur les figures 4 et 4a, l'axe de l'arbre 42a est au milieu de sa trajectoire, dans un plan "vertical" contenant l'axe O₃. L'axe O₂ est aussi dans ce plan.

Sur les figures 5 et 5a, la pièce de transfert 32 est au milieu de sa trajectoire et l'élément basculant 42 est incliné au maximum dans l'autre sens ("vers la droite" en considérant la figure 5a). C'est aussi la position dans laquelle le dispositif est représenté sur les figures 1 et 2.

Sur les figures 6 et 6a, la pièce de transfert est dans son autre position extrême, avec son axe O₂ en B. L'élément basculant est de nouveau incliné au maximum "vers la gauche".

Il est à noter que, pour que l'élément basculant 42 oscille de la même amplitude "à gauche" et "à droite" on place l'axe O₃ par construction dans un plan perpendiculaire au plan bissecteur de la trajectoire AB de la pièce de transfert et passant par le milieu de la flèche de l'arc 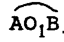 .

On remarque également que dans ce mode de réalisation, l'élément basculant impose à la pièce de transfert et donc au soufflet un mouvement suivant l'axe O₂. Ce mouvement est néanmoins d'amplitude très faible. Ainsi, dans le mode de réalisation représenté où l'excentration de la manivelle 39 est de 5 mm, l'angle 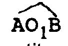 est de 90° et l'excentration du vilebrequin constituant l'élément basculant est de 2,5 mm, l'amplitude de ce mouvement (égal à la flèche f de l'arc de pivotement de l'axe de l'arbre 42a) est égal à 0,1 mm ce qui est sans conséquence sur la durée de vie du soufflet.

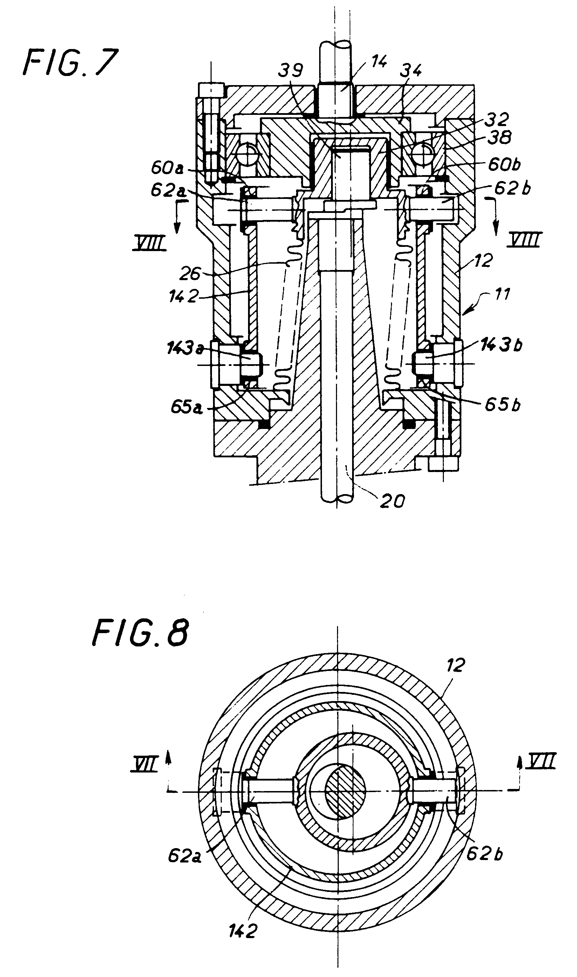

Les figures 7 et 8 illustrent une variante dans laquelle la forme et le montage de l'élément basculant permettent la transmission d'un mouvement de rotation d'un angle quelconque, éventuellement d'une rotation continue. Dans ce mode de réalisation, les éléments de structure semblables à ceux des figures 1 et 2 portent les mêmes références numériques et ne seront pas décrits à nouveau. L'élargissement 34 de l'arbre 14 et la pièce de transfert 32 sont globalement inchangés mais leur encombrement axial est plus faible, toutes choses égales par ailleurs, car ils n'abritent plus l'élément basculant. Ce dernier est ici constitué par un manchon tubulaire 142 agencé autour du soufflet 26. Il est articulé à la pièce de transfert 32 au voisinage de l'une de ses extrémités et au boîtier 11, au voisinage de son autre extrémité. Pour ce faire, ledit manchon est pourvu de deux premiers paliers 60a, 60b transversaux alignés dans lesquels sont engagés deux arbres alignés 62a, 62b, respectivement. Ces arbres sont suffisamment longs pour permettre le déplacement en coulissement de la pièce de transfert par rapport au manchon, sans que l'un ou l'autre ne puisse se dégager du palier correspondant.

Par ailleurs, deux tourillons alignés précités, 143a, 143b sont portés par les parois dudit boîtier et font saillie à l'intérieur de celui-ci. Ces tourillons sont engagés dans des seconds paliers transversaux alignés 65a, 65b, respectivement. L'axe commun de ces seconds paliers est parallèle à celui desdits premiers paliers. Ces deux axes sont respectivement situés au voisinage des deux extrémités du manchon, c'est-à-dire éloignés l'un de l'autre le plus possible pour limiter l'amplitude de l'élongation du soufflet pendant un tour complet.

Le fonctionnement est comparable à celui du dispositif précédemment décrit mais, du fait que la rotation dudit élargissement 34 de l'arbre d'entrée n'est pas limitée par l'élément basculant qui se trouve situé entièrement en dessous, le dispositif peut transmettre un mouvement de rotation d'un angle quelconque et éventuellement une rotation continue.

Bien entendu, l'invention n'est pas limitée aux modes de réalisation qui viennent d'être décrits. En particulier, si on considère la figure 7, il est clair que l'élongation longitudinale du soufflet dépend de la distance qui sépare les premiers et seconds paliers. On peut cependant annuler complètement cette élongation de façon que la pièce de transfert 32 soit soumise à une translation circulaire rigoureuse. Pour cela, il suffit de prévoir un degré de liberté supplémentaire, longitudinalement entre les tourillons 143a, 143b et l'élément basculant en forme de manchon ou bien entre ces mêmes tourillons et le boîtier.

Il suffit donc que les tourillons 143a, 143b puissent coulisser longitudinalement d'une très faible amplitude dans la paroi du boîtier ou que le manchon constituant l'élément basculant puisse coulisser parallèlement à l'axe du boîtier par rapport auxdits tourillons.

## Revendications

1. Dispositif de transmission étanche d'un mouvement de rotation, à soufflet (26), comprenant un arbre de commande (14) et un arbre récepteur (20) parallèles, du type dans lequel ledit soufflet (26) entoure un tel arbre récepteur (20) et est fixé de façon étanche par ses deux extrémités, d'une part à une partie fixe formant boîtier (11) et d'autre part, à une pièce de transfert (32) mobile à l'intérieur de ce boîtier (11) et couplée aux deux arbres (14, 20) par des liaisons de forme à excentrique, respectivement, caractérisé en ce que ladite pièce de transfert (32) est en outre guidée, avec possibilité de translation, selon une trajectoire voisine d'un plan perpendiculaire à la direction des deux arbres parallèles, par un élément basculant (42, 142) articulé transversalement à une direction longitudinale dudit boîtier par deux tourillons alignés (43a-43b, 143a-143b) s'étendant suivant une direction perpendiculaire à ladite direction des deux arbres.

2. Dispositif selon la revendication 1, caractérisé ce que ledit arbre de commande (14) et ledit arbre récepteur (20) sont alignés.

3. Dispositif selon la revendication 1 ou 2, caractérisé en ce que les liaisons de forme à excentrique réalisant le couplage entre l'arbre de commande et ladite pièce de transfert consistent en un élargissement (34) dudit arbre de commande (14), monté tournant dans ledit boîtier et comportant un palier (36) d'axe parallèle à celui dudit arbre de commande (14), à l'intérieur duquel est guidée une portion cylindrique de ladite pièce de transfert (32), coaxiale au périmètre de raccordement (30) entre cette pièce de tranfert (32) et ledit soufflet (26).

4. Dispositif selon l'une des revendications précédentes, caractérisé en ce que les liaisons de forme à excentrique réalisant le couplage entre ladite pièce de transfert (32) et ledit arbre récepteur (20) sont constituées par une manivelle (39) définie à une extrémité dudit arbre récepteur (20) et engagée dans un alésage (40) de ladite pièce de transfert (32).

5. Dispositif selon l'une des revendications précédentes, caractérisé en ce que ledit élément basculant (42) est constitué par un vilebrequin engagé à coulissement à travers un alésage (45) transversal de la pièce de transfert et comportant deux tourillons (43a, 43b) précités désaxés à ses extrémités, respectivement engagés dans deux paliers (46) alignés agencés dans ou portés par la paroi dudit boîtier (11).

6. Dispositif selon l'ensemble des revendications 3 et 5, caractérisé en ce que ledit vilebrequin (42) traverse un embrèvement (48) dudit élargissement (34) dudit arbre de commande (14) de façon que le débattement angulaire de ce dernier soit limité à une valeur donnée, par exemple un quart de tour.

7. Dispositif selon l'une des revendications 3 à 6, caractérisé en ce que ledit élargissement (34) dudit arbre de commande (14) est monté tournant dans ledit boîtier (11), par l'intermédiaire d'un roulement à billes (38).

8. Dispositif selon l'une des revendication 1 à 4, caractérisé en ce que ledit élément basculant (142) est constitué par un manchon tubulaire agencé autour dudit soufflet (26), en ce que ce manchon (142) est articulé au voisinage de l'une de ses extrémités à ladite pièce de transfert (32), et au voisinage de son autre extrémité audit boîtier (11), ledit manchon (142) étant pourvu de deux premiers paliers (60a, 60b) transversaux alignés, dans lesquels sont respectivement engagés deux arbres alignés (62a, 62b) portés par ladite pièce de transfert (32).

9. Dispositif selon la revendication 8, caractérisé en ce que deux tourillons alignés précités (143a, 143b) sont portés par les parois dudit boîtier (11) et font saillie à l'intérieur de celui-ci et en ce que ces tourillons sont engagés dans des seconds paliers transversaux alignés (65a, 65b) dudit manchon (142), respectivement, l'axe desdits seconds paliers (65a, 65b) étant parallèles à celui desdits premiers paliers (60a, 60b).

10. Dispositif selon la revendication 9, caractérisé en ce que ces deux tourillons alignés (143a, 143b) portés par les parois dudit boîtier (11) sont montés mobiles longitudinalement par rapport à celui-ci pour permettre une translation circulaire rigoureuse de ladite pièce de transfert (32).

11. Dispositif selon la revendication 9, caractérisé en ce que ledit manchon (142) est monté mobile parrallèlement à l'axe du boîtier (11) par rapport auxdits tourillons alignés (143a, 143b).

## Claims

1. Device for the fluid-tight transmission of a rotational movement, with bellows (26), comprising a parallel drive shaft (14) and driven shaft (20), of the type in which the said bellows (26) surrounds such a driven shaft (20) and is fixed in a fluid-tight manner by its two ends, at one end to a fixed part forming a casing (11) and at the other end to a transfer component (32) capable of moving inside this casing (11) and coupled to the two shafts (14, 20) by respective linkages of eccentric form, characterised in that the said transfer component (32) is in addition guided, with the possibility of translation, along a trajectory close to a plane perpendicular to the direction of the two parallel shafts, by a rocking element (42, 142) articulated transversely to a longitudinal direction of the said casing through two aligned journals (43a-43b, 143a-143b) extending alcng a direction perpendicular to the said direction of the two shafts.

2. Device according to Claim 1 characterised in that the said drive shaft (14) and the said driven shaft (20) are aligned.

3. Device according to Claim 1 or 2, characterised in that the linkages of eccentric form producing the coupling between the drive shaft and the said transfer component consist of a wider part (34) of the said drive shaft (14), mounted so that it can rotate in the said casing and comprising a bearing (36) with axis parallel to that of the said drive shaft (14), inside which is guided a cylindrical portion of the said transfer component (32), coaxial with the perimeter of the connection (30) between this transfer component (32) and the said bellows (26).

4. Device according to one of the preceding claims, characterised in that the linkages of eccentric form producing the coupling between the said transfer component (32) and the said driven shaft (20) consist of a crank (39) defined at one end of the said driven shaft (20) and engaged in a bore (40) of the said transfer component (32).

5. Device according to one of the preceding claims, characterised in that the said rocking element (42) consists of a cranked shaft which can slide through a transverse bore (45) in the transfer component and comprising the two aforesaid journals (43a, 43b) offset at its ends, fitted respectively in two aligned bearings (46) located in or carried by the wall of the said casing (11).

6. Device according to Claims 3 and 5 taken together, characterised in that the said cranked shaft (42) passes through a recess (48) in the said wider part (34) of the said drive shaft (14), so that the angular displacement of the latter is limited to a given value, for example a quarter of a revolution.

7. Device according to one of Claims 3 to 6, characterised in that the said wider part (34) of the said drive shaft (14) is mounted so that it can rotate in the said casing (11) through the intermediary of a ball race (38).

8. Device according to one of Claims 1 to 4, characterised in that the said rocking element (142) consists of a tubular sleeve positioned around the said bellows (26), in that this sleeve (142) is coupled near one of its ends to the said transfer component (32) and near its other end to the said casing (11), the said sleeve (142) being provided with two aligned transverse bearings (60a, 60b), in which are respectively engaged two aligned shafts (62a, 62b) carried by the said transfer component (32).

9. Device according to Claim 8, characterised in that the two aforesaid aligned journals (143a, 143b) are carried by the walls of the said casing (11) and protrude into the interior of the latter, and in that these journals are engaged in second aligned transverse bearings (65a, 65b) of the said sleeve (142), respectively the axis of the said second bearings (65a, 65b) being parallel to that of the said first bearings (60a, 60b).

10. Device according to Claim 9, characterised in that these two aligned journals (143a, 143b) carried by the walls of the said casing (11) are mounted so that they can move longitudinally with respect to the latter in order to permit a strictly circular translation of the said transfer component (32).

11. Device according to Claim 9, characterised in that the said sleeve (142) is mounted so that it can move parallel to the axis of the casing (11) with respect to the said aligned journals (143a, 143b).

## Patentansprüche

1. Abgedichtete Drehbewegung-Übertragungsvorrichtung mit folgenden Merkmalen:
ein Balg (26),
eine Antriebswelle (14),
eine dazu parallele Abtriebswelle (20),
der Balg (26) umgibt die Abtriebswelle (20) und ist an seinen beiden Enden abdichtend befestigt, und zwar einerseits an ein festes, ein Gehause (11) bildendes Teil und andererseits an ein bewegliches, im Inneren des Gehäuses (11) angeordnetes Übertragungsteil (32), und ist mit den beiden Wellen (14, 20) jeweils über Exzenter-Verbindungen gekuppelt,
dadurch gekennzeichnet,
daß das Übertragungsteil (32) noch mit der Möglichkeit der Translation gemäß einer Bahn benachbart einer Ebene senkrecht zur Richtung der beiden zueinander parallelen Wellen geführt ist, und zwar mittels eines Kipp- oder Schwenkelements (42, 142), das quer zur Längsrichtung des Gehäuses mit zwei zueinander ausgerichteten Lagerzapfen (43a, 43b, 143a, 143b) schwenkbar gelagert ist, die sich in senkrechter Richtung zur Richtung der beiden Wellen erstrecken.

2. Vorrichtung nach Anspruch 1,
dadurch gekennzeichnet, daß die Antriebswelle (14) und die Abtriebswelle (20) zueinander fluchten.

3. Vorrichtung nach Anspruch 1 oder 2,
dadurch gekennzeichnet, daß die Exzenter-Verbindungen die Kupplung zwischen der Antriebswelle und dem Übertragungsteil verwirklichen, welches aus einer Verdickung (34) der Antriebswelle (14) besteht, in dem Gehäuse drehbar montiert ist und ein Lager (36) mit paralleler Achse zu der der Antriebswelle (14) aufweist, in deren Innerem ein zylindrischer Teil des Ubertragungsteils (32) geführt ist, und zwar koaxial zum Umfang der Verbindung (30) zwischen dem Übertragungsteil (32) und dem Balg (26).

4. Vorrichtung nach einem der vorhergehenden Ansprüche, dadurch gekennzeichnet, daß die Exzenter-Verbindungen, welche die Kupplung zwischen dem Übertragungsteil (32) und der Abtriebswelle (20) verwirklichen, durch eine Kurbel (39) gebildet werden, die an einem Ende der Abtriebswelle (20) bestimmt wird und in eine Bohrung (40) des Übertragungsteils (32) eingreift.

5. Vorrichtung nach einem der vorhergehenden Anspruche, dadurch gekennzeichnet, daß das Schwenk- oder Kippelement (42) durch eine Kurbelwelle gebildet wird, die durch eine Bohrung (45) quer zu dem Übertragungsteil verschiebbar eingreift und zwei Lagerzapfen (43a, 43b) aufweist, die an den Enden außerachsig sitzen und jeweils in zwei Lager (46) eingreifen, die zueinander ausgerichtet sind und in der Wand des Gehäuses (11) angebracht sind bzw. von dieser getragen werden.

6. Vorrichtung nach Anspruch 3 und 5,
dadurch gekennzeichnet, daß die Kurbelwelle (42) eine Aussparung (48) der Verdickung (34) der Antriebswelle (14) in der Weise durchquert, daß der Winkelauschlag der Antriebswelle auf einen gegebenen Wert beschränkt wird, beispielsweise auf eine Vierteldrehung.

7. Vorrichtung nach einem der Ansprüche 3 bis 6,
dadurch gekennzeichnet, daß die Verdickung (34) der Antriebswelle (14) in dem Gehäuse (11) mittels Kugellager (38) drehbar untergebracht ist.

8. Vorrichtung nach einem der Ansprüche 1 bis 4,
dadurch gekennzeichnet, daß das Schwenk- oder Kippelement (142) durch eine rohrförmige Muffe gebildet wird, die sich um den Balg (26) herum erstreckt, und daß die Muffe (142) in der nähe einer ihrer Enden schwenkbar zu dem Übertragungsteil (32) und in der Nähe seines anderen Endes zu dem Gehause (11) schwenkbar gelagert ist, und daß die Muffe (142) mit zwei in Querrichtung zueinander ausgerichteten ersten Lagern (60a, 60b) versehen ist, in welchen jeweils zwei zueinander fluchtende Wellen (62a, 62b) eingreifen, die von dem Übertragungsteil (32) getragen werden.

9. Vorrichtung nach Anspruch 8,
dadurch gekennzeichnet, daß die beiden zueinander ausgerichteten Drehzapfen (143a, 143b) von den Wänden des Gehäuses (11) getragen werden und im Inneren des Gehäuses vorspringen, und daß die Lagerzapfen in zweiten, quer zueinander fluchtenden Lagern (65a, 65b) der Muffe (142) jeweils eingreifen, wobei die Achse der zweiten Lager (65a, 65b) parallel zur Achse der ersten Lager (60a, 60b) ausgerichtet sind.

10. Vorrichtung nach Anspruch 9,
dadurch gekennzeichnet, daß die beiden zueinander fluchtenden und von den Gehäusewänden getragenen Lagerzapfen (143a, 143b) in Längsrichtung beweglich mit Bezug auf das Gehäuse montiert sind, um eine genaue Kreistranslation des Übertragungsteils (32) zu ermöglichen.

11. Vorrichtung nach Anspruch 9,
dadurch gekennzeichnet, daß die Muffe (142) parallel beweglich zur Achse des Gehäuses (11) mit Bezug auf die zueinander fluchtenden Drehzapfen (143a, 143b) montiert ist.
